# EUROPÄISCHE PATENTSCHRIFT

(11) **EP 1 743 155 B1**
(45) Veröffentlichungstag und Bekanntmachung des Hinweises auf die Patenterteilung: **30.11.2011**
(21) Anmeldenummer: 05729513.1
(22) Anmeldetag: 23.03.2005
(51) Int. Cl.: G01L 19/00

(54) **DRUCKAUFNEHMER MIT AUSTAUSCHBAREM PROZESSANSCHLUSS**
PRESSURE SENSOR COMPRISING AN INTERCHANGEABLE PROCESS MEDIUM CONNECTION
CAPTEUR DE PRESSION COMPRENANT UN RACCORD DE FLUIDE DE PROCESSUS POUVANT ETRE CHANGE

(30) Priorität: 19.04.2004 DE 102004019389
(43) Veröffentlichungstag der Anmeldung: 17.01.2007
(73) Patentinhaber: Endress+Hauser GmbH+Co. KG, 79689 Maulburg (DE)
(72) Erfinder: TANNER, Jürgen, 79400 Kandern (DE)
(74) Vertreter: Andres, Angelika Maria
(86) Internationale Anmeldenummer: PCT/EP2005/051346
(87) Internationale Veröffentlichungsnummer: WO 2005/100940

(56) Entgegenhaltungen:
- EP-A2- 1 484 590
- EP-A2- 1 484 590
- DE-A1- 19 616 658
- US-A- 4 527 430
- US-A- 5 665 920
- US-A- 6 035 722

## Beschreibung

Die vorliegende Erfindung betrifft Druckaufnehmer insbesondere einen Druckaufnehmer mit einem austauschbaren Prozessaoschluss. Druckaufnehmer werden gewöhnlich mittels eines Prozessanschlusses an eine druckführende Leitung bzw. an einen druckführenden Behälter angeschlossen. Im Sinne eines minimierten logistischen Aufwands ist es wünschenswert, dass ein vorkalibriertes Standardmodul des Druckaufnehmers je nach Bedarf mit einer Vielzahl von Prozessanschlüssen verbunden werden kann, ohne dass die Verbindung des Standardmodul mit dem Prozessanschluss adverse Einflüsse auf die Kalibrierung hat. Andererseits erfordern Hygieneanwendungen rotraumfreie und spaltfreie Anschlüsse, um eine einfache Reinigung der medienführenden Behälter bzw. Leitungen, an denen der Druckaufnehmer montiert ist, zu gewährleisten. Der Druckschalter der Efector 500 Familie mit der Typbezeichnung PI2053 der Firma ifm Elektronik setzt zum Zwecke der Spaltfreiheit eine Mctalldichtung ein, wobei die Rückwirkungsfreiheit der Montage des Anschlusses auf die Kalibration des Druckaufnehmers aufgrund der erhöhten Einspannkräfte bei dieser Lösung zweifelhaft erscheint.

Die Europäische Patentanmeldung EP 1484590 A2 gehört zum Stand der Technik gemäß Artikel 54(3) EPÜ und offenbart einen Druckaufnehmer mit einem Drucksensor in einem Druckaufnehmergehäuse, wobei der Drucksensor durch eine Gehäuseöffnung mit einem Prozessmedium beaufschlagbar ist Zwischen dem Gehäuse und dem Drucksensor verläuft ein Ringspalt, der zur Gehäuseöffnung keilförmig zuläuft, und in welchen ein Dichtring radial eingespannt ist.

Es ist daher die Aufgabe dieser Erfindung einen Druckaufnehmer mit einem verbesserten Anschluß für Prozessanschltisse bereitzustellen. Die Aufgabe wird erfindungsgemäß gelöst durch den Druckaufnehmer gemäß des unabhängigen patentanspruchs 1.

Der erfindungsgemäße Druckaufnehmer umfasst

einen Drucksensor;

ein Druckaufnehmergehäuse welches vorzugsweise in seinem Inneren eine Sensorkammer definiert, in welcher der Sensor angeordnet ist, wobei das Druckaufnehmergehäuse ferner eine Gehäusestirnfläche mit einer Gehäuseöffnung aufweist, durch welche der Sensor mit einem Druck beaufschlagbar ist;

einen Prozessanschluss, welcher in einer Anschlussstirnfläche eine Frozessanschlussöffnung aufweist, wobei der Prozessanschluss derart mit dem Druckaufnehmergehäuse verbindbar ist dass die Prozessanschlussöffnung mit der Gehäuseöffnung fluchtet und dass die Anschlussstirnfläche die Gahäusestirfläche umgreift, wobei zwischen der Druckaufnehmergehäuse und dem. Prozessanschluss ein Dichtring angeordnet ist, welcher einen elastomerischen Werkstoff aufweist, und welcher einen Spalt zwischen der Anschlussstirnfläche der Gehäusestirnfläche abdichtet, wobei vorzugsweise die an den Spalt angrenzenden Bereiche der Anschlussstirnfläche und der Gehäusestirnfläche zueinander koplanar sind, wobei das Druckaufnehmergehäuse in dem an die Gehäusestirnfläche angrenzenden Montageabschnitt einen im Wesentlichen axialsymmetrischen oder zumindest abschnittsweise zylinderspunetrischen Aufbau hat, wobei ein erster Mantelflächenabschnitt des Montageabschnitts des Druckaufhehmergehäuses, welcher an die Gehäusestirnfläche angrenzt einen schalenförmigen ersten Dichtungssitz aufweist, der den Dichtring axial und radial abstützt. Der erste Dichtungssitz kann beispielsweise einen Abschnitt einer Toroidfläche oder Kugelschalenfläche umfassen.

Der erste Dichtungssitz weist vorzugsweise einen ersten gratfreien Übergang zur die Gehäusestirnfläche auf, welcher beispielsweise wulstartig verlaufen kann. Weiterhin weist der erste Dichtungssitz einen zweiten Übergang zu dem auf der von der Stirnfläche abgewandten Seite des Dichtungssitzes angrenzenden zweiten Mantelflächenabschnitt des Montageabschnitts auf. Der zweite Übergang ist vorzugsweise ebenfalls gratfrei. In Ebenen entlang der Zylinderachse verläuft der erste Dichtungssitz konkav, während der erste und der zweite Übergang konvex verlaufen. Die Krümmungsradien des konkaven Bereiches überstreichen dabei vorzugsweise einen Winkelbereich von mindestens 135°, weiter bevorzugt mindestens 150° und besonders bevorzugt mindestens 180°.

Der maximale Radius des zweiten Mantelflächenabschnitts ist größer, als der maximale Radius des ersten Übergangs. D.h., der die Gehäusestirnfläche begrenzende erste Übergang ist radial einwärts versetzt gegenüber dem zweiten Mantelflächenanschnitt des Montageabschnitts. So erfährt der Dichtring eine axiale und radiale Abstützung durch den ersten Dichtungssitz, so dass er beim Einsetzen des Montageabschnitts des Druckaufnehmergehauses in die Prozessanschlussöffnung zwischen dem ersten Dichtungssitz und der Prozessanschlussöffnung axial und radial eingespannt werden kann.

Die Prozessanschlussöffnung hat hierzu einen zum Montageabschnitt des Druckaufnehmergehäuses komplementären Aufbau. Die Anschlussstirnfläche weist an seinem der Prozessanschlussöffnung zugewandten Innenrand einen dritten gratfreien konvexem Übergang zu einem zweiten schalenförmigen Dichtungssitz auf, welcher in wiederum in die zylindrische Innwand der Prozessanschlussöffnung übergeht. Der minimale Radius der Prozessanschlussöffnung, welcher im Bereich des dritten Übergangs verläuft, ist kleiner als der maximale Radius des zweiten Übergangs und größer als der maximale Radius des ersten Übergangs.

Die Differenz zwischen dem minimalen Radius der Prozessanschlussöffnung und dem maximalen Radius des ersten Übergangs beträgt vorzugsweise nicht mehr als die halbe Materialstärke des Dichtungsrings, weiter bevorzugt nicht mehr als ein drittel und besonders bevorzugt nicht mehr als ein viertel der Materialstärke des Dichtungsrings. Diese Begrenzung ist insoweit verteilhaft als dadurch ein zu weites Hervorquellen des Dichtungsrings vermieden wird.

Andererseits ist es vorteilhaft, wenn die Differenz zwischen dem minimalen Radius der Prozessanschlussöffnung und dem maximalen Radius des ersten Übergangs so groß ist, dass der Dichtring in einem solchen Maße in dem Spalt zwischen der Gehäusestirnfläche und der Anschlussstirnfläche nach vorne gedrückt wird, dass die Dichtlinien, also die medienseitigen Berührungslinien zwischen dem Dichtungsring und dem Druckaufnehmergehäuse bzw. dem Prozessanschluss dermaßen in den Bereich des ersten bzw. dritten konvexen Übergangs verlagert werden, dass die Dichtung im Ergebnis spaltfrei ist und Hygieneanforderungen genügt. Hierzu beträgt die Differenz zwischen dem minimalen Radius der Prozessanschlussöffnung und dem maximalen Radius des ersten Übergangs vorzugsweise nicht weniger als ein Sechstel der Materialstärke des Dichtungsrings, weiter bevorzugt nicht weniger als ein Fünftel der Materialstärke des Dichtungsrings.

Der minimale Krümmungsradius beträgt im Sinne einer kompakten Dichtgeometrie im ersten bzw. dritten konvexen Übergang vorzugsweise nicht mehr als ein Sechstel und weiter bevorzugt nicht mehr als einem Achtel der Materialstärke des Dichtrings. Weiterhin beträgt der minimale Krümmungsradius im ersten bzw. dritten konvexen Übergang vorzugsweise nicht weniger als ein Zwölftel und weiter bevorzugt nicht weniger als ein Zehntel der Materialstärke des Dichtrings.

In einer derzeit bevorzugten Ausgestaltung weisen der Prozessanschluss und das Druckaufnehmergehäuse zueinander komplementäre Gewindeabschnitte auf, so dass Druckaufnehmergehäuse in den Prozessanschluss einschraubbar ist. Zur Definition einer exakten axialen Position der genannten Komponenten zueinander sind vorzugsweise axiale Anschlagflächen vorgesehen, die durch radiale Stufen gebildet werden. Es hat sich gezeigt, dass insbesondere bei einschraubbaren Komponenten auf eine drallfreie Bearbeitung der Übergänge und Dichtungssitze verzichtet werden kann.

Die Gehäuseöffnung ist bei einer Ausgestaltung des erfindungsgemäßen Druckaufnehmers mit einer druckempfindlichen Membran, insbesondere Metallmembran, verschlossen, welche den auf sie wirkenden Druck in ein hydraulisches Druckübertragungssystem einleitet, mit dem der Druck dem Drucksensor in dem Druckaufnehmergehäuse zugeführt wird.

Das Druckaufnehmergehäuse und der Prozessanschluss weisen beispielsweise metallische Werkstoffe, wie u.a. Edelstahl oder Aluminium auf. Als Dichtringmaterial ist beispielsweise EPDM geeignet.

Weitere Einzelheiten ergeben sich aus der Beschreibung des in der Zeichnung dargestellten Ausführungsbeispiels. Es zeigt:

Fig. 1: einen Teillängsschnitt durch einen Prozessanschlussflansch mit dem eingeschraubten Montageabschnitt eines Druckaufnehmers; und

Fig. 2: eine Detailansicht zu Fig. 1.

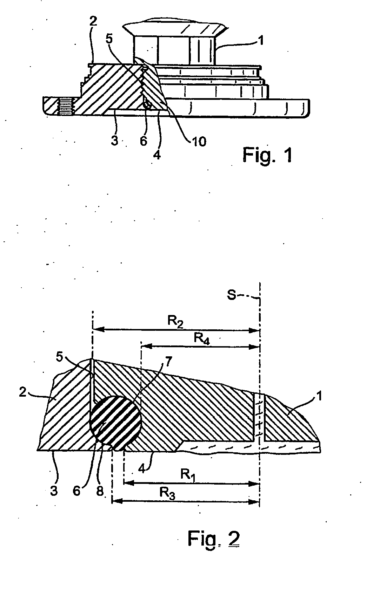

Das in Fign. 1 und 2 dargestellte Ausführungsbeispiel umfasst einen Druckaufnehmer mit einem Druckaufnehmergehäuse 1, welches einen Montageabschnitt 10 umfasst, der in eine Prozessanschlussöffnung 5 eines Prozessanschlusses 2 frontbündig eingeschraubt ist. Das Druckaufnehmergehäuse 1 weist eine Gehäusestirnfläche 4 auf, welche von einer im Wesentlichen koplanaren Anschlussstirnfläche 3 des Prozessanschlusses 2 umgeben ist. Das Gehäuse und der Prozessanschluss sind aus Edelstahl gefertigt. Zwischen den beiden Stirnflächen verläuft ein Spalt, der durch einen Dichtring 6 verschlossen ist, so dass im Ergebnis eine spaltfreie Verbindung zwischen dem Prozessanschluss 2 und dem Druckaufnehmergehäuse 1 gegeben ist. Der Dichtring weist einen elastomerischen Werkstoff auf, beispielsweise EPDM. Der Dichtring hat einen Innendurchmesser von 15,54 mm und einen Materialstärke von 2,62 mm. Der Innendurchmesser entspricht dem zweifachen Wert des minimalen Radius R₄ eines ersten schalenförmigen Dichtungssitzes 7, welcher in der Mantelfläche des Montageabschnitts 10 ausgebildet ist. Der erste Dichtungssitz 7 ist toroidschalenartig, und sein Krümmungsradius in Schnittebenen, die durch die Symmetrieachse S festgelegt sind, ist etwa gleich der halben Materialstärke des Dichtrings 6. Der konkave Teil des ersten Dichtungssitzes 7 wird zu der Gehäusestirnfläche 4 durch einen ersten konvexen gratfreien Übergang begrenzt, dessen minimaler Krümmungsradius in den zuvor definierten Axialschnittebenen etwa 0,3 mm beträgt. Der Maximale Radius R des ersten Übergangs beträgt etwa 8,75 mm. Zur Mantelfläche des Umformergehäuses ist ein zweiter konvexer Übergang mit einem minimalen Krümmungsradius von 0,3 mm in den Axialschnittebenen vorgesehen. Der Radius R₂ der angrenzenden Mantelfläche ist hinreichend groß, dass die radiale Stufe zwischen R₄ und dem zweiten Übergang als axiale Abstützung des Dichtrings 6 zu dessen axialer Einspannung dienen kann. Die Stirnfläche 3 des Prozessanschlusses wird zur Öffnung hin durch einen dritten konvexen Übergang begrenzt, der wieder einen minimalen Krümmungsradius von etwa 0,3 mm in den Axialschnittebenen aufweist und an den ein zweiter schalenförmiger Dichtungssitz 8 anschließt, der schließlich in einen zylindrischer Wandabschnitt der Prozessanschlussöffnung 5 übergeht. Der zweite schalenförmige Dichtungssitz weist in einem konvexen Abschnitt etwa den gleichen Krümmungsradius auf, wie der konvexe Abschnitt des ersten schalenförmigen Dichtungssitzes 7. Der minimale Radius R₃ des dritten Übergangs ist kleiner als der Radius R₂ des zweiten Übergangs und um 0,55 mm größer als der maximale Radius R₁ des ersten Übergangs. Der Spalt zwischen den Stirnflächen des Prozessanschlusses 2 und des Druckaufnehmergehäuses 1 wird durch den Dichtring 6 geschlossen, welcher beim Einschrauben des Druckaufnehmergehäuses in die Prozessanschlussöffnung durch die axialen Einspannkräfte so weit in den Spalt gedrückt wird, dass die Berührungslinien zwischen dem Dichtring 6 und dem ersten bzw. dritten Übergangsbereich mindestens bis zur axialen Ebene des maximalen Radius R1 bzw. bis zur axialen Ebene des minimalen Radius R3 in Richtung der Stirnflächen verschoben sind. Vorzugsweise verlaufen die Berührungslinien in dem axialen Bereich zwischen der Ebene der Stirnflächen und der axialen Ebene des maximalen Radius R1 bzw. der axialen Ebene des minimalen Radius R3.

## Patentansprüche

1. Druckaufnehmer umfassend:
Drucksensor;
Druckaufnehmergehäuse, wobei das Druckaufnehmergehäuse (1) ferner eine Gehäusestirnfläche (4) mit einer Gehäuseöffnung aufweist, durch welche der Drucksensor mit einem Druck beaufschlagbar ist;
einen Prozessanschluss (2), welcher in einer Anschlussstirnfläche eine Prozessanschlussöffnung (5) aufweist, wobei der Prozessanschluss derart mit dem Druckaufnehmergehäuse verbindbar ist dass die Prozessanschlussöffnung mit der Gehäuseöffnung fluchtet, und dass die Anschlussstirnfläche (3) die Gehäusestirnfläche (4) umgreift,
wobei das Druckaufnehmergehäuse in einem an die Gehäusestirnfläche angrenzenden Montageabschnitt (10) einen im wesentlichen axialsymmetrischen oder zumindest abschnittsweise zylindersymmetrischen Aufbau hat
**dadurch gekennzeichnet, dass**
zwischen der Druckaufnehmergehäuse und dem Prozessanschluss ein Dichtring (6) angeordnet ist, welcher einen elastomerischen Werkstoff aufweist, und welcher einen Spalt zwischen der Anschlussstirnfläche der Gehäusestirnfläche abdichtet und
ein erster Mantelflächenabschnitt des Montageabschnitts des Druckaufnehmergehäuses welcher an die Gehäusestirnfläche angrenzt einen schalenförmigen ersten Dichtungssitz (7) aufweist, der den Dichtring axial und radial abstützt.

2. Druckaufnehmer nach Anspruch 1, wobei die an den Spalt angrenzenden Bereiche der Anschlussstirnfläche und der Gehäusestirnfläche zueinander koplanar sind.

3. Druckaufnehmer nach Anspruch 1 oder 2, wobei das Druckaufnehmergehäuse in seinem Inneren eine Sensorkammer definiert, in welcher der Sensor angeordnet ist

4. Druckaufnehmer nach Anspruch 1, wobei der erste Dichtungssitz vorzugsweise einen ersten gratfreien Übergang zur die Gehäusestirnfläche aufweist.

5. Druckaufnehmer nach Anspruch 4, wobei der erste Dichtungssitz einen zweiten Übergang zu dem auf der von der Stirnfläche abgewandten Seite des Dichtungssitzes angrenzenden zweiten Mantelflächenabschnitt des Montageabschnitts aufweist.

6. Druckaufnehmer nach Anspruch 5, wobei in Ebenen entlang der Zylinderachse der erste Dichtungssitz konkav verläuft und der erste und der zweite Übergang konvex verlaufen.

7. Druckaufnehmer nach Anspruch 5 oder 6, wobei der maximale Radius des zweiten Mantelflächenabschnitts größer ist als der maximale Radius des ersten Übergangs.

8. Druckaufnehmer nach einem der Ansprüche 5-7, wobei die Anschlussstirnfläche an ihrem der Prozessanschlussöffnung zugewandten Innenrand einen dritten konvexen Übergang zu einem zweiten schalenförmigen Dichtungssitz aufweist, welcher in eine zylindrische Innenwand der Prozessanschlussöffnung übergeht.

9. Druckaufnehmer nach Anspruch 8, wobei der minimale Radius der Prozessanschlussöffnung, welcher im Bereich des dritten Übergangs verläuft, kleiner als der maximale Radius des zweiten Übergangs und größer als der maximale Radius des ersten Übergangs ist.

10. Druckaufnehmer nach Anspruch 9, wobei die Differenz zwischen dem minimalen Radius der Prozessanschlussöffnung und dem maximalen Radius des ersten Übergangs nicht mehr als die halbe Materialstärke des Dichtungsrings, weiter bevorzugt nicht mehr als ein Drittel und besonders bevorzugt nicht mehr als ein Viertel der Materialstärke des Dichtungsrings beträgt.

11. Druckaufnehmer nach Anspruch 9 oder 10, wobei die Differenz zwischen dem minimalen Radius der Prozessanschlussöffnung und dem maximalen Radius des ersten Übergangs nicht weniger als ein Sechstel der Materialstärke des Dichtungsrings, weiter bevorzugt nicht weniger als ein Fünftel der Materialstärke des Dichtrings beträgt.

12. Druckaufnehmer nach einem der Ansprüche 9 bis 11, wobei der minimale Krümmungsradius im ersten bzw. dritten konvexen Übergang nicht mehr als ein Sechstel und weiter bevorzugt nicht mehr als einem Achtel der Materialstärke des Dichtrings beträgt.

13. Druckaufnehmer nach einem der Ansprüche 9 bis 12, wobei der minimale Krümmungsradius im ersten bzw. dritten konvexen Übergang nicht weniger als ein Zwölftel und weiter bevorzugt nicht weniger als ein Zehntel der Materialstärke des Dichtrings beträgt.

14. Druckaufnehmer nach einem der vorhergehenden Ansprüche, wobei der Prozessanschluss und das Druckaufnehmergehäuse zueinander komplementäre Gewindeabschnitte aufweisen, so dass Druckaufnehmergehäuse in den Prozessanschluss einschraubbar ist.

## Claims

1. Pressure sensor comprising:
Pressure sensor;
Pressure sensor housing, wherein the pressure sensor housing (1) further has a housing end face (4) with a housing opening through which the pressure sensor is exposed to a pressure;
A process connection (2) which has a process connection opening (5) in a connection end face, wherein the process connection can be connected to the pressure sensor housing in such a way that the process connection opening is flush with the housing opening, and that the connection end face (3) encompasses the housing end face (4),
Wherein the pressure sensor housing has a primarily axial symmetrical structure, or at least a partially cylindrical symmetrical structure, in a mounting section (10) adjacent to the housing end face
**Characterized in that**:
A sealing ring (6) is arranged between the pressure sensor housing and the process connection, said ring having an elastomer material, and sealing a gap between the connection end face of the housing end face and
A first lateral surface section of the mounting section of the pressure sensor housing - which is adjacent to the housing end face - has a dish-like first seal seating (7) that provides axial and radial support for the sealing ring.

2. Pressure sensor as claimed in Claim 1, wherein the areas of the connection end face and the housing end face adjacent to the gap are coplanar relative to one another.

3. Pressure sensor as claimed in Claim 1 or 2, wherein in the interior of the pressure sensor housing a sensor chamber is defined in which the sensor is arranged.

4. Pressure sensor as claimed in Claim 1, wherein the first seal seating preferably has a first burr-free transition area to the housing end face.

5. Pressure sensor as claimed in Claim 4, wherein the first seal seating has a second transition area to the second lateral surface section of the mounting section which is adjacent to the side of the seal seating that faces away from the end face.

6. Pressure sensor as claimed in Claim 5, wherein the first seal seating is concave and the first and second transition areas are convex at planes along the cylinder axis.

7. Pressure sensor as claimed in Claim 5 or 6, wherein the maximum radius of the second lateral surface section is greater than the maximum radius of the first transition area.

8. Pressure sensor as claimed in one of the Claims 5-7, where the connection end face has a third convex transition area to a second dish-like seal seating on its inner edge which faces towards the process connection opening, and said second dish-like seal seating transitions into a cylindrical inner wall of the process connection opening.

9. Pressure sensor as claimed in Claim 8, wherein the minimum radius of the process connection opening in the area of the third transition area is smaller than the maximum radius of the second transition area and larger than the maximum radius of the first transition area.

10. Pressure sensor as claimed in Claim 9, wherein the difference between the minimum radius of the process connection opening and the maximum radius of the first transition area is not more than half the material thickness of the sealing ring, preferably not more than a third and most preferably not more than a quarter of the material thickness of the sealing ring.

11. Pressure sensor as claimed in Claim 9 or 10, wherein the difference between the minimum radius of the process connection opening and the maximum radius of the first transition area is not less than a sixth of the material thickness of the sealing ring, and preferably not less than a fifth of the material thickness of the sealing ring.

12. Pressure sensor as claimed in one of the Claims 9-11, wherein the minimum radius of curvature in the first and third convex transition area is not more than a sixth and preferably not more than an eighth of the material thickness of the sealing ring.

13. Pressure sensor as claimed in one of the Claims 9-12, wherein the minimum radius of curvature in the first and third convex transition area is not less than a twelfth and preferably not less than a tenth of the material thickness of the sealing ring.

14. Process sensor as claimed in one of the previous claims, wherein the process connection and the pressure sensor housing have complementary threaded sections relative to one another such that the pressure sensor housing can be screwed into the process connection.

## Revendications

1. Transmetteur de pression comprenant :
un capteur de pression ;
un boîtier de transmetteur de pression, le boîtier de transmetteur de pression (1) comportant en outre une surface frontale de boîtier (4) avec une ouverture de boîtier, à travers laquelle le capteur de pression peut être alimenté en une pression ;
un raccord process (2), lequel présente dans une surface frontale de raccord une ouverture de raccord process (5), le raccord process pouvant être relié avec le boîtier de transmetteur de pression de telle manière que l'ouverture de raccord process affleure l'ouverture du boîtier, et que la surface frontale de raccord (3) entoure la surface frontale de boîtier (4),
le boîtier de transmetteur de pression présentant, dans une section de montage (10) avoisinant la surface frontale de boîtier, une structure pour l'essentiel axisymétrique ou au moins partiellement cylindrosymétrique,
caractérisé en que
qu'entre le boîtier de transmetteur de pression et le raccord process est disposé un joint (6), qui présente un matériau élastomère et qui assure l'étanchéité d'une fente entre la surface frontale de raccord de la surface frontale de boîtier et
qu'une première section de surface d'enveloppe de la section de montage du boîtier de transmetteur de pression, laquelle avoisine une surface frontale de boîtier, présente un premier logement de joint (7) en forme de cuvette, lequel supporte le joint d'étanchéité dans le sens axial et radial.

2. Transmetteur de pression selon la revendication 1, pour lequel les zones de la surface frontale de raccord et de la surface frontale de boîtier, avoisinant la fente, sont coplanaires l'une par rapport à l'autre.

3. Transmetteur de pression selon la revendication 1 ou 2, pour lequel le boîtier de transmetteur de pression définit dans son intérieur une chambre de capteur, dans laquelle le capteur est disposé.

4. Transmetteur de pression selon la revendication 1, pour lequel le premier logement de joint présente de préférence une première transition exempte de bavures par rapport à la surface frontale de boîtier.

5. Transmetteur de pression selon la revendication 4, pour lequel le premier logement de joint présente une deuxième transition par rapport à la deuxième section de surface d'enveloppe de la section de montage, avoisinant le côté opposé à la surface frontale du logement de joint.

6. Transmetteur de pression selon la revendication 5, pour lequel, dans les plans le long de l'axe cylindrique le premier logement de joint est concave et la première et la deuxième transitions sont convexes.

7. Transmetteur de pression selon la revendication 5 ou 6, pour lequel le rayon maximal de la deuxième section de surface d'enveloppe est supérieur au rayon maximal de la première transition.

8. Transmetteur de pression selon l'une des revendications 5 à 7, pour lequel la surface frontale de raccord présente, en son bord intérieur faisant face à l'ouverture de raccord process, une troisième transition convexe par rapport à un deuxième logement de joint en forme de cuvette, laquelle se transforme en une paroi intérieure cylindrique de l'ouverture de raccord process.

9. Transmetteur de pression selon la revendication 8, pour lequel le rayon minimal de l'ouverture de raccord process, lequel s'étend dans la zone de la troisième transition, est inférieur au rayon maximal de la deuxième transition et supérieur au rayon maximal de la première transition.

10. Transmetteur de pression selon la revendication 9, pour lequel la différence entre le rayon minimal de l'ouverture de raccord process et le rayon maximal de la première transition ne représente pas plus de la demi-épaisseur de matériau de la bague d'étanchéité, de préférence pas plus d'un tiers et particulièrement de préférence pas plus d'un quart de l'épaisseur de matériau de la bague d'étanchéité.

11. Transmetteur de pression selon la revendication 9 ou 10, pour lequel la différence entre le rayon minimal de l'ouverture de raccord process et le rayon maximal de la première transition ne représente pas moins d'un sixième de l'épaisseur de matériau de la bague d'étanchéité, de préférence pas moins d'un cinquième de l'épaisseur de matériau de la bague d'étanchéité.

12. Transmetteur de pression selon l'une des revendications 9 à 11, pour lequel le rayon de courbure minimal dans la première ou dans la troisième transition convexe ne représente pas plus d'un sixième, et de préférence pas plus d'un huitième de l'épaisseur de matériau de la bague d'étanchéité.

13. Transmetteur de pression selon l'une des revendications 9 à 12, pour lequel le rayon de courbure minimal dans la première ou dans la troisième transition convexe ne représente pas moins d'un douzième, et de préférence pas moins d'un dixième de l'épaisseur de matériau de la bague d'étanchéité

14. Transmetteur de pression selon l'une des revendications précédentes, pour lequel le raccord process et le boîtier de transmetteur de pression présentent l'un par rapport à l'autre des parties filetées complémentaires, de telle manière que le boîtier de transmetteur de pression puisse être vissé dans le raccord process.
